# EUROPEAN PATENT APPLICATION

(11) **EP 4 302 899 A1**
(43) Date of publication of application: **10.01.2024**
(21) Application number: 22762950.8
(22) Date of filing: 15.02.2022
(51) Int. Cl.: B22D 11/10, C04B 38/06, C04B 38/08, C01B 32/05, C01B 32/20

(54) **INSULATION MATERIAL FOR REFRACTORY OBJECT**

(30) Priority: 01.03.2021 JP 2021031873
(71) Applicant: Akechi Ceramics Co., Ltd., Ena-shi, Gifu 5097795 (JP)
(72) Inventor: KACHI, Keisuke, Ena-shi, Gifu 509-7795 (JP); SHINATO, Masahiro, Ena-shi, Gifu 509-7795 (JP)
(74) Representative: Goddar, Heinz J.
(86) International application number: PCT/JP2022/005783
(87) International publication number: WO 2022/185893

(57) **Abstract**

[Problem] The present invention addresses the problem of providing an insulation material for a refractory object, which increases the structural strength during construction and improves thermal insulation properties.

[Solution] An insulation material 1 for a refractory object according to the present invention coats the surface of a refractory object used for casting and contains hollow particles 2 and a burnt material 3 for ensuring strength. As a result, structural strength during construction can be increased and heat insulation properties can be improved.

## Description

### Technical Field

The present invention relates to an insulation material for a refractory object for coating the surface of the refractory object such as a nozzle for continuous casting.

### Background Art

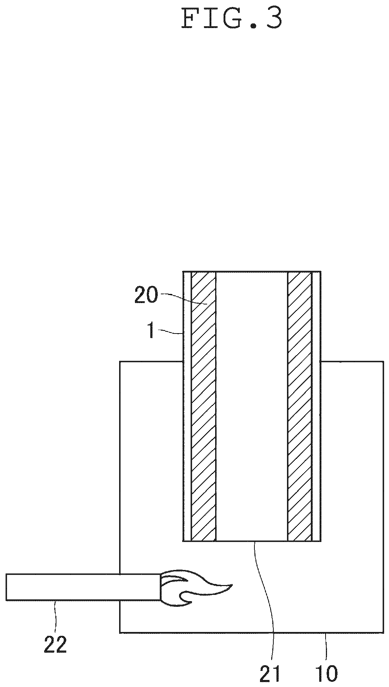

In continuous casting, molten steel at approximately 1500-1600°C is poured through a continuous casting nozzle. In this case, the continuous casting nozzle is subjected to a severe heat load that may cause cracks or breakage thereof, so that the continuous casting nozzle is preheated to prevent damage. As a method of preheating, for example, as shown in Fig. 3, a burner 22 capable of supplying fuel gas and oxygen from a lower discharge port 21 of a nozzle 20 for continuous casting placed in a furnace of a preheating device 10 is generally used to heat a material to 1000-1300°C.

The continuous casting nozzle is subjected to severe heat shock during pouring of the molten steel since the nozzle cools down until the casting starts after completion of preheating, so that an insulation material for a refractory object is applied to the surface of the continuous casting nozzle 20 (a refractory object) to prevent cooling during standby.

This type of insulation material includes one in which hollow particles 40 are added to a base material 30 to form voids, whereby the insulation effect is improved, for example, as shown in Fig. 4 (an insulation coating material for a carbon-containing refractory object disclosed in JP2003-95757A, for example). However, a problem arises in which when a large amount of hollow particles 40 is added in order that a required insulation effect may be achieved, the proportion of the base material 30 that enhances the structural strength becomes low, with the result of an insufficient structural strength during construction of an insulation layer (shear strength less than 1 N/mm²) .

### Prior Art Document

### Patent Documents

Patent Document 1: Japanese Patent Application Publication No. JP 2003-95757A

### Summary of the Invention

### Problem to Be Overcome by the Invention

Therefore, an object of the present invention is to provide an insulation material for a refractory object that can increase structural strength during construction and improve insulation properties.

### Means for Overcoming the Problem

To overcome the problem, the present invention provides an insulation material for a refractory object, for coating a surface of the refractory object used in casting, characterized in that the insulation material contains hollow particles and a burnt material for ensuring strength (claim 1) .

The burnt material for ensuring strength may be a carbon material (claim 2). The carbon material may be one or a mixture of two or more of carbon fiber, graphite powder and resin fiber (claim 3). The graphite powder may be scale graphite, carbon black, or a mixture thereof (claim 4). The burnt material for securing strength may be contained in 5-50% by weight (claim 5).

### Effect of the Invention

According to the insulation material for the refractory object, disclosed in any one of claims 1 to 4, the structural strength during construction can be increased and the insulation properties can be improved.

According to the insulation material for the refractory object, the effect achieved by each of the above claims can be achieved more reliably.

### Brief Description of the Drawings

Fig. 1 is an explanatory diagram for explaining the action of the insulation material for the refractory object according to the present invention;
Fig. 2 is an explanatory diagram for explaining the effect of the insulation material for the refractory object according to the present invention;
Fig. 3 is an explanatory diagram for explaining a manner of preheating the refractory object; and

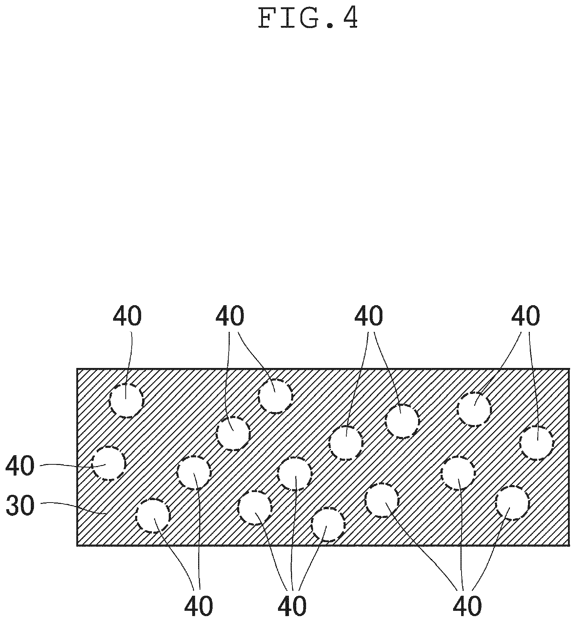

Fig. 4 is an explanatory diagram for explaining a conventional insulation material for a refractory object.

### Best Mode for Carrying Out the Invention

The present invention has achieved an insulation material for a refractory object that can increase structural strength during construction and improve the insulation properties by containing the burnt material 3 for ensuring strength in addition to the hollow particles 2.

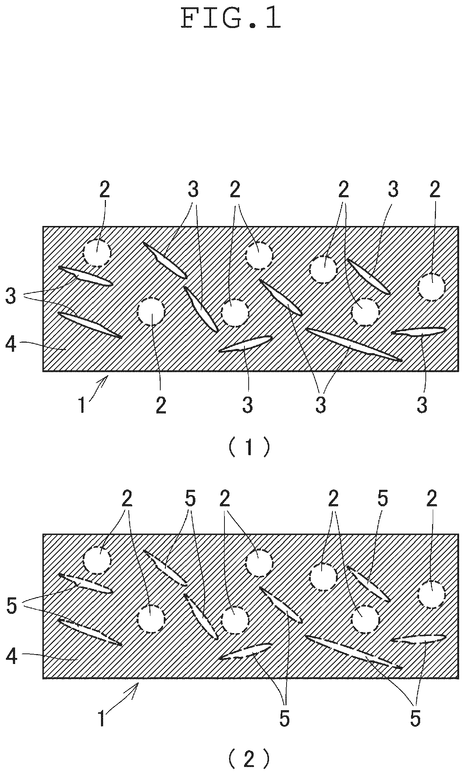

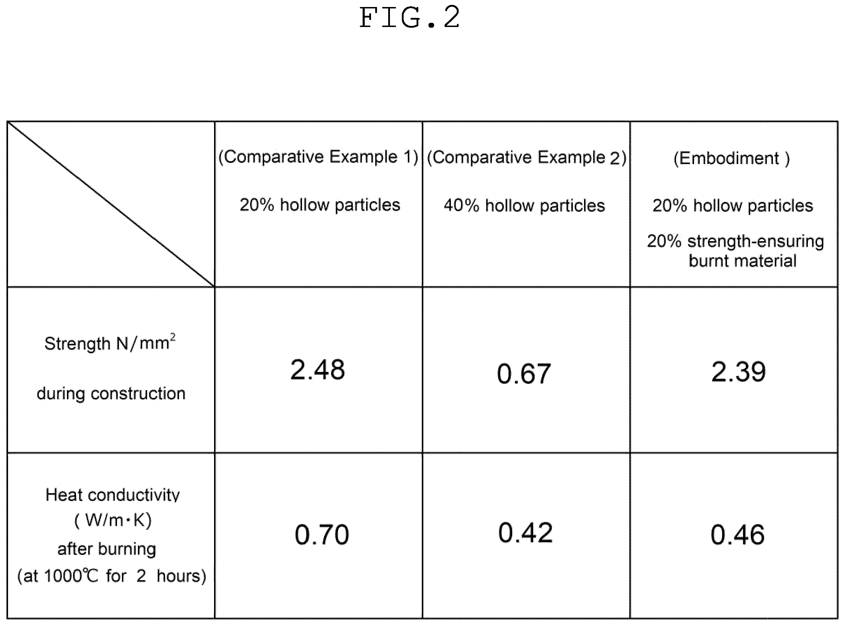

The insulation material for the refractory object according to the present invention will be described with use of an example shown in Fig. 1 or Fig. 2.

An insulation material 1 for a refractory object of the embodiment is an insulation material for coating the surface of a refractory object used in casting and contains hollow particles 2 and burnt materials 3 for ensuring strength. The configuration of the insulation material 1 will be described in detail below.

The insulation material 1 for the refractory object is a spray-type insulation material for coating the surface of a refractory object 20 such as a continuous casting nozzle used for continuous casting, for example, as shown in Fig. 3, and contains the hollow particles 2 and the strength-ensuring burnt materials 3.

The hollow particles 2 are added in order to form voids in the heat insulating layer formed of the heat insulating material 1 for the refractory object and improve the heat insulation properties by being hollow. Silica-alumina hollow particles can be preferably used as the hollow particles.

The insulation material 1 for the refractory object contains the strength-ensuring burnt material 3 as well as the hollow particles as a material that improves the heat insulation properties of the insulation layer formed on the surface of the refractory object. The addition of the strength-ensuring burnt material 3 to a base material 4 eliminates the need to add a large amount of hollow particles 2 which reduce the structural strength, so that the structural strength during construction can be increased and the insulation properties can be improved.

More specifically, the strength-ensuring burnt material 3 function as a material for ensuring strength during construction as shown in Fig. 1(1), and the strength-ensuring burnt material 3 itself is burned off during preheating, forming voids 5 in the insulation layer formed on the surface of the refractory object, as shown in Fig. 1(2), with the result of an improvement of the insulation properties.

Although the strength-ensuring burnt material 3 in the embodiment is carbon fiber, the strength-ensuring burnt material in the insulation material for the refractory object according to the present invention should not be limited to the carbon fiber but can be any material that can increase the structural strength during construction and improve the insulation properties by being burnt during preheating. For example, a carbon material is suitable for use.

Although one or mixtures of an Al₂O₃-SiO₂ compound, Al₂O₃, SiO₂, and SiC, for example are suitable for use as the base material 4 constituting the insulation material 1 for the refractory object, the base material 4 should not be limited to them.

The strength-ensuring burnt material 2 may be contained in the insulation material 1 for the refractory object by 5-50% by weight. When the strength-ensuring burnt material 2 is less than 5% by weight, the strength-ensuring burnt material 2 is not effective in increasing the structural strength of the construction during construction and improving the insulation properties of the insulation layer formed by being burnt during preheating. On the other hand, when the content of the strength-ensuring burnt material 2 exceeds 50% by weight, the strength of the insulation material is significantly reduced.

The insulation material 1 for the refractory object may be liquefied with a liquid binder outside of the total of 100% by weight of the hollow particles 2, the burnt materials 3 for ensuring strength, and the base material 4. The liquid binder acts as a binder during construction and hardens when dried. Inorganic binders, organic binders, or mixtures thereof are suitably used as the binder. For example, soda silicate, potassium silicate, soda phosphate, colloidal silica, or mixtures thereof can suitably be used as the inorganic binder. Phenolic resins, sugar hydrolysates and/or reduced starch saccharides, molasses, methylcellulose, starch, natural rubber, casein, vinyl acetate, or mixtures thereof can suitably be used as the organic binder, for example.

Since the insulation material 1 for the refractory object of the embodiment is a sprayed insulation material, it is applied by spraying onto the refractory object 20 with a spray gun or the like. Although water may be added to the material in this case, the insulation material 1 for refractory object should not be limited to the sprayed insulation material. The insulation material 1 can be applied to the surface of the refractory object 20 by a roller, brush, or other means, and others that can be constructed by various known construction methods are widely included in the insulation material for refractory object according to the present invention.

### (Embodiment)

The embodiment of the insulation material for the refractory object according to the present invention was prepared by mixing 20% by weight of carbon material (carbon fiber) as the strength-ensuring burnt material, 20% by weight of silica-alumina hollow particles as the hollow particles, and 60% by weight of silica-alumina powder as the base material. A sprayed insulation material was prepared by adding a liquid binder to the insulation material for the refractory object of this embodiment and was sprayed onto the surface of the refractory object 20 (a continuous casting nozzle) and allowed to dry to be formed into an insulation layer.

### (Comparative Example 1)

Comparative Example 1 that did not contain any strength-ensuring burnt material was prepared by mixing 20% by weight of silica-alumina hollow particles as the hollow particles and 80% by weight of silica-alumina powder as the base material. A sprayed insulation material was prepared by adding a liquid binder to the insulation material for the refractory object of this example and was sprayed onto the surface of the refractory object 20 (a continuous casting nozzle) and allowed to dry to be formed into an insulation layer.

### (Comparative Example 2)

Comparative Example 2 that did not contain any strength-ensuring burnt material was prepared by mixing 40% by weight of silica-alumina hollow particles as the hollow particles and 60% by weight of silica-alumina powder as the base material. A sprayed insulation material was prepared by adding a liquid binder to the insulation material for the refractory object of this example and was sprayed onto the surface of the refractory object 20 (a continuous casting nozzle) and allowed to dry to be formed into an insulation layer.

### (Strength Test of Insulation Layer and Test Results)

Measurements were made of the structural strengths of the insulation layers respectively formed of the insulation materials for the refractory objects in Comparative Example 1, Comparative Example 2, and the Embodiment. As shown in the upper row of the table in Fig. 2, the structural strength of the insulation layer of Comparative Example 1 was 2.48 N/mm², the structural strength of the insulation layer of Comparative Example 2 was 0.67 N/mm², and the structural strength of the insulation layer of the Embodiment was 2.39 N/mm².

### (Heat Conductivity Test of Insulation Layer and Test Results)

Insulation layers formed of the insulation materials for the refractory objects of Comparative Example 1, Comparative Example 2, and the Embodiment were each burned at 1000°C for 2 hours, and thereafter, the heat conductivity was calculated. As shown in the lower row of the table in Fig. 2, the heat conductivity of the insulation layer of Comparative Example 1 was 0.70 W/m·K, the heat conductivity of the insulation layer of Comparative Example 2 was 0.42 W/m·K, and the heat conductivity of the insulation layer of the Embodiment was 0.46 W/m·K. This confirms that the Concrete Example in which 20% by weight of 40% by weight of the hollow particles of Comparative Example 2 was replaced by the strength-ensuring burnt material maintained the same level of heat conductivity as Comparative Example 2 and had substantially the same level of heat conductivity as Comparative Example 2 containing 40% by weight of hollow particles.

### (Consideration)

The results of the strength test and the heat conductivity test of the above insulation layers ensure that the insulation material for the refractory object containing the strength-ensuring burnt material can increase the structural strength of the insulation layer as compared with the insulation material for the refractory object in which the base material contains only the hollow particles and can also maintain the heat insulation properties at a high level.

### Explanation of Reference Symbols

- 1: insulation material for refractory object;
- 2: hollow particles;
- 3: burnt material for ensuring strength;
- 4: base material;
- 5: void;
- 10: preheating device;
- 20: continuous casting nozzle;
- 21: discharge port;
- 22: burner;
- 30: base material; and
- 40: hollow particles.

## Claims

1. An insulation material for a refractory object, for coating a surface of the refractory object used in casting, **characterized in that** the insulation material contains hollow particles and a burnt material for ensuring strength.

2. The insulation material of claim 1, wherein the burnt material for ensuring strength is a carbon material.

3. The insulation material of claim 2, wherein the carbon material is one or a mixture of two or more of carbon fiber, graphite powder and resin fiber.

4. The insulation material of claim 2, wherein the graphite powder is scale graphite, carbon black, or a mixture thereof.

5. The insulation material of any one of claims 1 to 4, wherein the burnt material for ensuring strength is contained in 5-50% by weight.
